# EUROPEAN PATENT APPLICATION

(11) **EP 4 390 854 A1**
(43) Date of publication of application: **26.06.2024**
(21) Application number: 22882708.5
(22) Date of filing: 12.10.2022
(51) Int. Cl.: G06T 15/04

(54) **RENDERING PROCESSING METHOD AND APPARATUS, AND DEVICE AND STORAGE MEDIUM**

(30) Priority: 22.10.2021 CN 202111234775
(71) Applicant: Huawei Technologies Co., Ltd., Shenzhen, Guangdong 518129 (CN)
(72) Inventor: XU, Liangcheng, Shenzhen, Guangdong 518129 (CN); SHANG, Qin, Shenzhen, Guangdong 518129 (CN); ZHANG, Zhibo, Shenzhen, Guangdong 518129 (CN)
(74) Representative: MERH-IP Matias Erny Reichl Hoffmann Patentanwälte PartG mbB
(86) International application number: PCT/CN2022/124756
(87) International publication number: WO 2023/066098

(57) **Abstract**

Embodiments of this application disclose a rendering processing method and apparatus, a device, and a storage medium, and belong to the field of three-dimensional image processing. The method includes: performing rendering processing on a first render pass to obtain a first texture, and then performing further processing on the first texture to obtain a multi-layer texture as an attachment texture of the first render pass instead of using the first texture as the attachment texture of the first render pass; and when a rendering instruction of another render pass subsequently invokes the attachment texture of the first render pass, intercepting a corresponding rendering instruction, performing a corresponding modification, and executing a modified rendering instruction, to ensure that rendering processing of the another render pass can be performed normally. According to the method provided in this application, some common render pass problems in different applications can be resolved without modifying program code for a large quantity of applications one by one, and workload can be greatly reduced when the render pass problem is resolved.

## Description

This application claims priority to Chinese Patent Application No. 202111234775.1, filed with the China National Intellectual Property Administration on October 22, 2021 and entitled "RENDERING PROCESSING METHOD AND APPARATUS, DEVICE, AND STORAGE MEDIUM", which is incorporated herein by reference in its entirety.

### TECHNICAL FIELD

This application relates to the field of three-dimensional image processing, and in particular, to a rendering processing method and apparatus, a device, and a storage medium.

### BACKGROUND

Three-dimensional (3-dimensional, 3D) images are more widely used in life, such as a three-dimensional game and a three-dimensional animation. A three-dimensional image rendering technology also develops rapidly.

Rendering processing of the three-dimensional image is to generate an observation image at a specific observation location and a specific observation angle based on a pre-established three-dimensional model and a texture. The rendering processing is usually performed in a unit of an image frame. Display data of the image frame may be obtained through the rendering processing, and display data of consecutive image frames obtained through the rendering processing may form a three-dimensional animation. A rendering processing process of an image frame may include rendering processing of a plurality of render passes, and each render pass is responsible for image rendering of one dimension (for example, color or brightness). For example, a person skilled in the art may preset that rendering processing process of each image frame includes rendering processing of 34 render passes. The texture may be considered as a data unit. The data unit records image information in a dimension, for example, color information, brightness information, or material information. The texture is usually in a form of a bitmap, and the bitmap is also referred to as a bitmap and includes pixel values corresponding to a plurality of pixels. An input of the render pass can be referred to as a sampling texture, and an output can be referred to as an attachment texture. The sampling texture can be a pre-stored texture or an attachment texture of another render pass.

The rendering processing of the render pass is usually implemented by executing program code, and the person skilled in the art needs to pre-write program code of each render pass. Usually, the person skilled in the art may be somewhat random when writing the program code. Although the person skilled in the art can ensure that the written program code can be correctly executed, the person skilled in the art may not carefully and comprehensively consider various kinds of possible impact, for example, software and hardware resource occupation that may be caused by the rendering processing process and impact of a rendering processing manner on quality of the image. Therefore, various render pass problems may exist in an application for three-dimensional image rendering. For the application, although these problems are not fatal, use of the application and a terminal is affected to some extent. There are a large quantity of and various types of applications for the three-dimensional image rendering in an application market. Some render pass problems are common in the large quantity of applications, and if the problem is resolved by modifying program code, heavy workload is required.

### SUMMARY

Embodiments of this application provide a rendering processing method and apparatus, a device, and a storage medium, to resolve a problem of heavy workload caused by modifying program code in the conventional technology. The technical solutions are as follows:

According to a first aspect, a rendering processing method is provided, and the method includes:
determining, in a rendering process of a first image frame, that a first render pass on which rendering processing is currently performed is a to-be-optimized render pass; obtaining a first texture obtained by performing the rendering processing on the first render pass; generating a multi-layer texture based on the first texture, and using the multi-layer texture as an attachment texture of the first render pass; and when a rendering instruction of a second render pass is received, and a sampling texture invoked by the rendering instruction is the attachment texture of the first render pass, modifying the rendering instruction to a rendering instruction for performing sampling rendering on the multi-layer texture, and executing a modified rendering instruction.

According to the solution shown in this embodiment of this application, a two-dimensional image at an observation location and an observation angle may be generated based on a pre-established three-dimensional model and a texture. The solution may be used for image rendering in a three-dimensional game, image rendering in three-dimensional scene simulation, image rendering of three-dimensional animation special effect in a movie or a television series, visual design, and the like.

In a process of generating the multi-layer texture based on the first texture, the first texture is a single-layer texture, the multi-layer texture is a group of textures that use the first texture as a first-layer texture, and a quantity of layers of the multi-layer texture may be determined based on an actual requirement, for example, 5, 10, or 20. Any single-layer texture in the multi-layer texture except the first-layer texture is a result of smoothing downsampling processing performed on a previous-layer texture, and sampling ratios of any single-layer texture except the first-layer texture and a previous-layer texture may be the same or may be different. When the multi-layer texture is generated based on the first texture, a used method may be a Mipmap technology, or may be another texture mapping technology.

According to the solution, the multi-layer texture may be generated based on the first texture output by the to-be-optimized render pass, and the multi-layer texture is used as the attachment texture of the render pass. When a rendering instruction of another render pass subsequently invokes the attachment texture of the first render pass, a corresponding rendering instruction is intercepted, a corresponding modification is performed, and a modified rendering instruction is executed, to ensure that rendering processing of the another render pass can be performed normally. Some common render pass problems can be resolved by replacing the rendering instruction without modifying program code one by one, and workload can be greatly reduced when the render pass problem is resolved.

In a possible implementation, in a rendering processing process, attribute information of render passes may be obtained in a rendering process of a second image frame; and a to-be-optimized render pass may be recorded in the render passes based on the attribute information of the render passes.

The second image frame is an image frame before the first image frame, may be a previous image frame, may be a second previous image frame, or the like.

In the rendering processing process, the attribute information of the render pass may be obtained from a rendering instruction and intermediate data and result data of the rendering processing process. The attribute information may be related information of a sampling texture and/or an attachment texture of the render pass. For example, a sampling texture identifier and an attachment texture identifier are obtained from the rendering instruction, and a resolution of an attachment texture, an original resolution and a post-sampling resolution of a sampling texture, and the like are obtained from the intermediate data or the result data of the rendering processing process.

When the to-be-optimized render pass is determined, detection may be performed frame by frame, that is, each render pass is detected in a rendering process of each image frame, and the to-be-optimized render pass is recorded. When the to-be-optimized render pass is determined, detection may alternatively be performed at an interval of a specific quantity of image frames, that is, after all to-be-optimized render passes in an image frame are determined, to-be-optimized render passes included in a specific quantity of image frames after the image frame are based on the image frame. For a case in which rendering processing of each render pass in rendering processes of different image frames is fixed, the to-be-optimized render pass may alternatively be determined manually.

A computer automatically detects the image frame and determines the to-be-optimized render pass, which has high processing efficiency and can also ensure real-time performance of render pass optimization.

In a possible implementation, in a rendering processing process, a downsampling render pass set in the render passes may be determined based on sampling texture identifiers, attachment texture identifiers, and resolutions of attachment textures of the render passes. The downsampling render pass set includes the first render pass and a third render pass, the third render pass is a render pass that performs consecutive downsampling on the attachment texture of the first render pass, and the third render pass may be a plurality of render passes. The first render pass is recorded as the to-be-optimized render pass.

In this manner, a plurality of render passes on which consecutive downsampling is performed may be detected, to optimize the render passes.

In a possible implementation, in a rendering processing process, rendering processing of the third render pass may be prevented.

The detected third render pass is set to a to-be-prevented render pass. In a rendering process of an image frame, each time a rendering instruction of a render pass is detected, whether the render pass is the to-be-prevented render pass can be determined. If the render pass is the to-be-prevented render pass, processing of a rendering instruction corresponding to the render pass is prevented.

According to the solution, redundant rendering processing can be reduced, and rendering processing efficiency of the image frame can be improved.

In a possible implementation, in a rendering processing process, when a rendering instruction of a fourth render pass is received, and a sampling texture invoked by the rendering instruction of the fourth render pass is an attachment texture of the third render pass, the rendering instruction of the fourth render pass is modified to a rendering instruction for performing sampling rendering on the multi-layer texture by using the attachment texture of the first render pass as the sampling texture, and a modified rendering instruction is executed.

According to the solution, when any render pass invokes an attachment texture of the to-be-prevented render pass as the sampling texture, a texture with a matched resolution may be directly invoked from the attachment texture of the first render pass as the sampling texture of the render pass. Therefore, an error in rendering processing is prevented.

In a possible implementation, in a rendering processing process, the first render pass in the render passes is determined based on sampling texture identifiers of the render passes, attachment texture identifiers of the render passes, and original resolutions and post-sampling resolutions of sampling textures of the render passes; and the first render pass is recorded as the to-be-optimized render pass. The attachment texture of the first render pass is a sampling texture of a fifth render pass, and an original resolution of the sampling texture of the fifth render pass is greater than a post-sampling resolution.

According to the solution shown in this embodiment of this application, in addition to generating a multi-layer texture for the to-be-optimized render pass, smoothing processing may be performed on a sampled texture when sampling rendering is performed on a local area.

According to the solution, the multi-layer texture with different resolutions may be generated for a single-layer texture, and the smoothing processing is performed when downsampling is performed in a process of generating the multi-layer texture. This can avoid pixel stacking. In this way, when the sampling rendering is performed on the local area, the sampling texture with the matched resolution may be selected, so that image warping can be avoided.

In a possible implementation, the second image frame is a previous image frame of the first image frame.

According to the solution, the second image frame and the first image frame are adjacent image frames, and render passes of the second image frame and the first image frame have a high matching degree. In this way, accuracy of rendering processing can be well ensured, and a rendering error is prevented.

In a possible implementation, in a rendering processing process, based on a correspondence between an identifier of an original rendering script and an identifier of a rendering script for performing sampling rendering on the multi-layer texture, an identifier of a target rendering script corresponding to the identifier of the original rendering script in the rendering instruction may be determined. The identifier of the original rendering script in the rendering instruction is modified to the identifier of the target rendering script, to obtain the rendering instruction for performing sampling rendering on the multi-layer texture.

The rendering script may indicate specific processing of a pixel value of the texture in the rendering processing process. The target rendering script is a rendering script for replacement that is written by a system developer based on the original rendering script. Compared with the original rendering script, the target rendering script may include modifying a sampling instruction in the rendering script, or may include another modification to the rendering instruction, for example, adding a parameter that needs to be invoked, performing calculation processing on the pixel value by a multiple, and the like.

According to the solution, in the rendering process, after a to-be-optimized render pass is detected, for a render pass that invokes an attachment texture of the to-be-optimized render pass as a sampling texture, an original rendering script of the render pass is directly replaced with a target rendering script, so that the rendering script can be quickly modified and processing efficiency can be improved. In addition, there are not many types of original rendering scripts that need to be replaced in an application. Therefore, in this way, a correspondence table is prepared in advance, which does not occupy too many storage resources.

According to a second aspect, a rendering processing apparatus is provided. The apparatus includes one or more modules, and the one or more modules are configured to implement the method according to the first aspect and the possible implementations of the first aspect.

According to a third aspect, a computer device is provided. The computer device includes a memory and a processor, and the memory is configured to store computer instructions.

The processor executes the computer instructions stored in the memory, so that the computer device performs the method according to the first aspect and the possible implementations of the first aspect.

According to a fourth aspect, a computer-readable storage medium is provided. The computer-readable storage medium stores computer program code. When the computer program code is executed by a computer device, the computer device performs the method according to the first aspect and the possible implementations of the first aspect.

According to a fifth aspect, a computer program product is provided. The computer program product includes computer program code, and when the computer program code is executed by a computer device, the computer device performs the method according to the first aspect and the possible implementations of the first aspect.

Beneficial effect brought by the technical solutions provided in embodiments of this application is as follows:
In embodiments of this application, it is determined that the first render pass is the render pass that needs to be optimized, and after the rendering processing is performed on the first render pass, the first texture is not used as the attachment texture of the first render pass, but further processing is performed on the first texture to obtain the multi-layer texture as the attachment texture of the first render pass. In addition, when the rendering instruction of the another render pass subsequently invokes the attachment texture of the first render pass, the corresponding rendering instruction is intercepted, the corresponding modification is performed, and the modified rendering instruction is executed, to ensure that the rendering processing of the another render pass can be performed normally. Render passes that have processing advantages by using the multi-layer texture may be predetermined manually, through automatic detection, or in another manner and are used as the to-be-optimized render pass. Further, when the rendering processing is performed on the to-be-optimized render pass, the to-be-optimized render pass is optimized in the foregoing processing manner. In this way, some common render pass problems in different applications can be resolved without modifying program code for a large quantity of applications one by one, and workload can be greatly reduced when the render pass problem is resolved.

### BRIEF DESCRIPTION OF DRAWINGS

FIG. 1 is a schematic diagram of a structure of a terminal device according to an embodiment of this application;
FIG. 2 is a flowchart of a rendering processing method according to an embodiment of this application;
FIG. 3 is a flowchart of a rendering processing method according to an embodiment of this application;
FIG. 4 is a flowchart of a rendering processing method according to an embodiment of this application; and
FIG. 5 is a schematic diagram of a structure of a rendering processing apparatus according to an embodiment of this application.

### DESCRIPTION OF EMBODIMENTS

To make objectives, technical solutions, and advantages of this application clearer, the following further describes implementations of this application in detail with reference to accompanying drawings.

First, several nouns in embodiments of this application are described first.

Rendering processing: Rendering processing is key processing on an image frame that is generated in real time in a three-dimensional animation display process. The rendering processing is a process of generating an observation image at a specific observation location and a specific observation angle based on a pre-established three-dimensional model and a texture (which can be referred to as a fixed texture and is described in detail below). The rendering processing is usually performed in a unit of an image frame. Display data of the image frame may be obtained through the rendering processing, and display data of consecutive image frames obtained through the rendering processing may form a three-dimensional animation. For example, in a shooting game, in a third-person view, an observation location is a location at a specific distance behind a game character operated by a user, and an observation angle is an angle toward the game character. In this case, it can be considered that the three-dimensional model is an animation photographing scene. In this scene, a camera is placed based on the observation location and the observation angle, and each image frame photographed by the camera is each image frame obtained through the rendering processing.

Render pass: Rendering processing is usually performed on any image frame in a unit of the render pass. Each render pass is responsible for performing image rendering of a dimension on the image frame, for example, color, shadow, reflection, additional light, or backlight. Each image frame can be obtained only after rendering processing is performed on a plurality of render passes. For example, rendering processing of render passes A1 to A34 needs to be performed on a first image frame, and the rendering processing of the render passes A1 to A34 also needs to be performed on a second image frame. It can be vividly considered that the render passes are mapped layer by layer in a specific sequence, each render pass is responsible for one layer of mapping, and finally the image frame is obtained. Usually, when a scene remains unchanged, the rendering processing performed on each render pass remains unchanged. When the scene is switched, the rendering processing of the render pass may change. For example, the first image frame is in an outdoor scene, and a render pass A8 is responsible for color rendering processing. The second image frame is in an indoor scene, and the render pass A8 becomes responsible for shadow rendering processing.

Rendering instruction: is an instruction that performs the rendering processing. The rendering processing of the render pass is usually implemented by executing program code, and a person skilled in the art needs to pre-write program code of each render pass. In a process of executing the program code of the render pass, an application sends the rendering instruction to a system program. The rendering instruction may carry information such as a texture identifier of a sampling texture (which is described in detail below), a script identifier of a rendering script (which is described in detail below) that needs to be invoked during the rendering processing, a sampling ratio, and a sampling area.

Rendering script: indicates specific processing of a pixel value of a texture in a rendering processing process, for example, multiplying each pixel value of the texture by a coefficient.

Texture: may be considered as a data unit. The data unit records image information in a dimension, for example, color information, brightness information, or material information. The texture is usually in a form of a bitmap, and the bitmap is also referred to as a bitmap and includes of pixel values corresponding to a plurality of pixels. Some textures record pixel values corresponding to pixels in a two-dimensional coordinate system (corresponding to the image frame), and some textures record pixel values corresponding to pixels in a three-dimensional coordinate system (corresponding to the three-dimensional model).

Attachment texture: A texture output by the render pass may be referred to as the attachment texture. An output of the render pass is real-time. As the observation location and observation time change, attachment textures output by a same render pass at different time points may be different. For example, a render pass A4 is responsible for rendering the color information. When an image frame is rendered, an image within an observation range is a beach at an observation location and an observation angle at this time, and an attachment texture output by the render pass A4 is mainly golden yellow. When another image frame is rendered, an image within an observation range is sea at an observation location and an observation angle at this time, and an attachment texture output by the render pass A4 is mainly blue.

Fixed texture: A pre-established texture may be referred to as the fixed texture. The fixed texture is non-real-time and may be recorded in an installation package of the application.

Sampling texture: A texture input by the render pass may be referred to as the sampling texture. The sampling texture of the render pass may be the fixed texture, may be an attachment texture output by another render pass, or may include both the fixed texture and the attachment texture. When the render pass performs the rendering processing, sampling is first performed on the input sampling texture. The sampling may be performed at a specific sampling ratio. For example, downsampling with a sampling ratio of 1/2 is performed on a sampling texture of 1024 (a quantity of pixels)*1024, to obtain a texture of 512*512. The sampling may alternatively be performed on a specified sampling area. For example, a texture of 512*512 in an upper left corner is obtained from a sampling texture of 1024*1024. The sampling texture is therefore named.

Downsampling: A size of the sampling texture is reduced at a specific sampling ratio. For example, 1/2 downsampling is reducing both a length and a height to 1/2 of an original size. The reduced ratio becomes the sampling ratio.

Attribute information: is related information of the sampling texture and/or the attachment texture of the render pass. The attribute information may include a sampling texture identifier, an attachment texture identifier, an original resolution and a post-sampling resolution of a sampling texture, a resolution of an attachment texture, and the like.

Single-layer texture: is a texture including a single bitmap.

Multi-layer texture: includes a plurality of single-layer textures. A next-layer texture is obtained by reducing a size of a previous-layer texture at a specified ratio. For example, a quantity of layers of the multi-layer texture is five, and resolutions of the five-layer texture are 1024* 1024, 512*512, 256*256, 128*128, and 64*64.

Mipmap technology: is a type of texture mapping technology, which can generate a multi-layer texture with reduced size layer by layer based on an original texture.

LOD technology: is a level of details (level of details, LOD) technology, which is an effective graphics generation acceleration method, and can quickly determine an image (a texture) required for current processing from a plurality of images (textures) with different resolutions. The LOD technology is a technology for performing sampling in the multi-layer texture. For each pixel, based on a distance between the pixel and the observation location, a most appropriate layer is selected from the multi-layer texture for sampling.

Embodiments of this application provide a rendering processing method. The method is used in a terminal device, and is performed by a system program in the terminal device. Rendering processing is used to generate a two-dimensional image at a specific observation location and a specific observation angle based on a pre-established three-dimensional model and a texture. Specifically, the method may be used for image rendering in a three-dimensional game, image rendering in three-dimensional scene simulation, image rendering of three-dimensional animation special effect in a movie or a television series, visual design, and the like. In embodiments of this application, the image rendering of the three-dimensional game is used as an example to describe the solution in detail. Other cases are similar to the case, and details are not described in embodiments of this application.

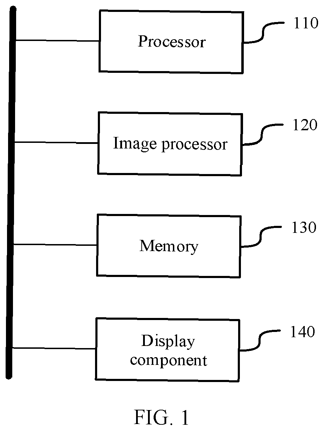

The terminal device may be a device with a display function, for example, a mobile phone, a tablet computer, a smart screen, a notebook computer, or a desktop computer. In terms of hardware components, a structure of the terminal device may be shown in FIG. 1, and includes a processor 110, a graphics processing unit 120, a memory 130, and a display component 140.

The processor 110 may be a central processing unit (central processing unit, CPU), a system on chip (system on chip, SoC), or the like. An application of a game and a system program for performing rendering processing may be installed in the processor 110. The processor 110 may be configured to determine a to-be-optimized render pass, may be configured to obtain an attachment texture obtained by performing the rendering processing on the render pass, and may be configured to replace a rendering script in a rendering instruction, and the like.

The graphics processing unit (graphic processing unit, GPU) 120 may be a display chip integrated into the central processing unit, or may be a display chip independent of the central processing unit. The graphics processing unit 120 may be configured to receive rendered image data, generate, based on the image data, image data used by the display component 140, send the image data to the display component 140, and the like.

The memory 130 may include various volatile memories or nonvolatile memories, such as a solid-state drive (solid-state drive, SSD), a dynamic random access memory (dynamic random access memory, DRAM) memory, or the like. The memory 130 may be configured to store pre-stored data, intermediate data, and result data in a rendering processing process. The memory 130 may be specifically configured to store the attachment texture of the render pass, may be configured to store the rendering instruction of the render pass, and may be configured to store attribute information of the render pass, and the like.

The display component 140 may be a display panel integrated into the terminal device, or may be a display device that is separated from and that establishes a communication connection to the terminal device. When the display component 140 is the display panel, the display component 140 may be a twisted nematic (twisted nematic, TN) panel, a vertical alignment (vertical alignment, VA) panel, an in-plane switching (in-plane switching, IPS) panel, or the like. The display panel may be configured to display a complete frame of image, may be configured to display the attachment texture of the render pass, and the like.

In addition to the processor 110, the image processor 120, the memory 130, and the display component 140, the terminal device may further include a communication component, an audio collection component, an audio output component, and the like.

The communication component may be a wired network connector, a wireless fidelity (wireless fidelity, Wi-Fi) module, a Bluetooth module, a honeycomb network communication module, or the like. The communication component may be used by the terminal device to perform data transmission with another device. The another device may be a server, another terminal device, or the like. The communication component may be configured to send the image data obtained through the rendering processing to the another terminal for display, and the like.

The audio collection component may be a microphone, and is configured to collect voice of a user.

The audio output component may be a speaker, a headset, or the like, and is configured to play audio.

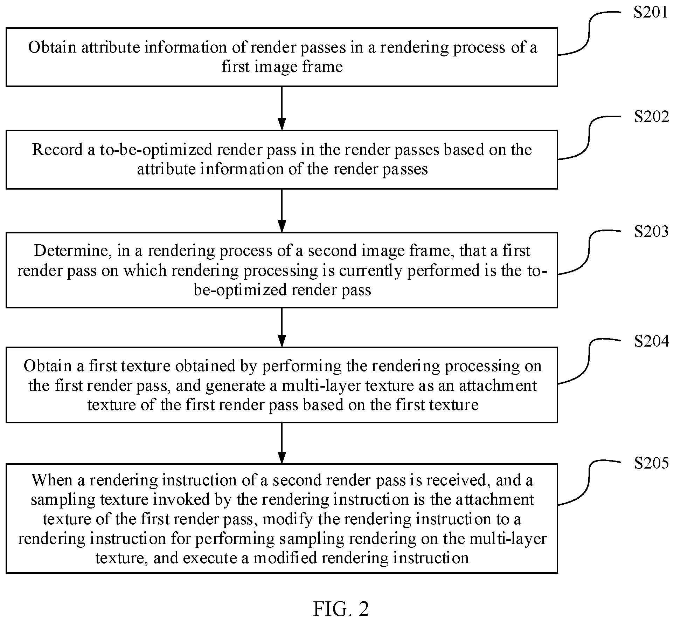

An embodiment of this application provides a processing procedure of a rendering processing method shown in FIG. 2, including the following processing steps.

S201: Obtain attribute information of render passes in a rendering process of a first image frame.

In a running process of a game application, in a three-dimensional scene, a terminal device may perform three-dimensional image rendering frame by frame. In a rendering process of any image frame, the application sends rendering instructions of the render passes to a system program in a specific sequence, where the rendering instruction carries a pass identifier of the render pass. Each time the system program receives a rendering instruction of a render pass, rendering processing of the render pass is executed based on the rendering instruction. In the process, the system program may obtain some specified attribute information of the render pass, where the attribute information may include a sampling texture identifier, an attachment texture identifier, an original resolution and a post-sampling resolution of a sampling texture, a resolution of an attachment texture, and the like of the current render pass. Some attribute information may be obtained from the rendering instruction, for example, the sampling texture identifier and the attachment texture identifier. Some attribute information may be obtained from intermediate data or result data of a rendering processing process, for example, the original resolution and the post-sampling resolution of the sampling texture and the resolution of the attachment texture.

S202: Record a to-be-optimized render pass in the render passes based on the attribute information of the render passes.

A system developer presets an optimization condition of the render pass in the system program, and the system program detects specified attribute information of each render pass in a rendering process of each image frame. When the specified attribute information of any render pass meets the optimization condition, the system program may determine the corresponding render pass as the to-be-optimized render pass. Optionally, in some cases, using a single-layer texture as an attachment texture causes various problems, and the optimization condition may be used to detect a corresponding case. For example, in a case in which a plurality of render passes perform consecutive downsampling on the single-layer texture, processing resource occupation is serious, a corresponding optimization condition may be set for detection, and corresponding optimization is performed. Alternatively, in a case in which the post-sampling resolution obtained after sampling is performed on the single-layer texture is less than the original resolution, image warping occurs, a corresponding optimization condition may be set for detection, and corresponding optimization is performed. Specific detection and optimization processing of the two cases are described in detail below.

The system program may pre-establish a to-be-optimized pass identifier set, and the to-be-optimized pass identifier set is used to store a pass identifier of the to-be-optimized render pass.

After obtaining the attribute information of the render passes in the rendering process of the first image frame, the system program determines, based on one or more preset optimization conditions and the obtained attribute information, a render pass that meets the optimization condition, and adds a corresponding pass identifier to the to-be-optimized pass identifier set. If the to-be-optimized pass identifier set already includes the pass identifier, the to-be-optimized pass identifier set may be updated by using the pass identifier of the currently determined render pass that meets the optimization condition.

Optionally, the processing of detecting and recording the to-be-optimized render pass may be performed in the rendering process of each image frame of the three-dimensional image, or the processing of detecting and recording the to-be-optimized render pass may be performed at an interval of a specific quantity of image frames.

Optionally, in addition to the manner mentioned in steps S201 and S202 in which the system program determines the to-be-optimized render pass in real time, the system developer may further manually determine the to-be-optimized render pass. For example, an image scene of a game is fixed, and rendering processing of each render pass of the game in rendering processes of different image frames is fixed. In this case, in the rendering processing process of the first image frame, the system developer may manually determine, based on the specified attribute information that is about each render pass and that is obtained by the system program, the to-be-optimized render pass from a plurality of render passes, and record the to-be-optimized render pass in the to-be-optimized pass identifier set, where the data set does not need to be updated in real time. For another example, a game has a plurality of scenes, and in any one of the scenes, rendering processing of each render pass in rendering processes of different image frames is fixed. In the game, an application developer only separately determines a to-be-optimized pass identifier set in a rendering process of a first image frame of each scene. When scene switching is performed in a running process of the application, the system program only needs to invoke a to-be-optimized pass identifier set corresponding to a current application scene.

S203: Determine, in a rendering process of a second image frame, that a first render pass on which rendering processing is currently performed is the to-be-optimized render pass.

In the rendering process of the second image frame, the system program may receive the rendering instructions of the render passes sent by the application in the sequence, where the rendering instruction carries the pass identifier of the render pass. Each time the system program receives a pass identifier of a render pass, the system program may search the to-be-optimized pass identifier set for determining whether the pass identifier is included, that is, determine whether the render pass on which the rendering processing is currently performed is the to-be-optimized render pass. If the pass identifier is in the to-be-optimized pass identifier set, the system program determines that the first render pass on which the rendering processing is currently performed is the to-be-optimized render pass. For example, in the rendering process of the second image frame, rendering processing is currently performed on a render pass A2. The system program receives a rendering instruction sent by the application, determines that a pass identifier of the render pass A2 is A2, and searches the to-be-optimized pass identifier set for determining whether the pass identifier A2 is included. If the pass identifier A2 is included, the system program determines that the render pass A2 is the to-be-optimized render pass, and performs next processing.

S204: Obtain a first texture obtained by performing the rendering processing on the first render pass, and generate a multi-layer texture as an attachment texture of the first render pass based on the first texture.

After receiving a rendering instruction of the first render pass, the system program performs the rendering processing based on the rendering instruction to obtain the first texture. When the first render pass is determined as the to-be-optimized render pass, the first texture is not used as the attachment texture of the first render pass. The system program processes, based on the first texture and based on a Mipmap technology, the first texture to generate the multi-layer texture, and determines the multi-layer texture as the attachment texture of the first render pass. A quantity of layers of the multi-layer texture may be preset by the system developer. For example, the system developer presets, to five layers, the quantity of layers of the multi-layer texture generated based on the Mipmap technology. After the first render pass obtains the first texture with a resolution of 1024*1024, the system program processes the first texture based on the Mipmap technology, to generate five layers of textures with resolutions of 1024*1024, 512*512, 256*256, 128*128, and 64*64 respectively, and the system program determines the five layers of textures as the attachment texture of the first render pass. The first layer of texture with the resolution of 1024*1024 is the first texture.

S205: When a rendering instruction of a second render pass is received, and a sampling texture invoked by the rendering instruction is the attachment texture of the first render pass, modify the rendering instruction to a rendering instruction for performing sampling rendering on the multi-layer texture, and execute a modified rendering instruction.

A manner of modifying the rendering instruction may be replacing a rendering script invoked by the rendering instruction. Correspondingly, the system developer may write a rendering script for replacement based on an original rendering script that needs to be replaced, and precreate a script identifier replacement table that can record an identifier of the original rendering script and an identifier of the rendering script for replacement. This process is described in detail below:

First, the original rendering script that needs to be replaced is determined. The system developer can run the application and obtain the attribute information of the render passes in various display scenes during running of the application. Further, the to-be-optimized render pass is determined, a render pass that uses the attachment texture of the to-be-optimized render pass as the sampling texture, namely, a render pass of a to-be-modified rendering instruction is determined, an identifier of a rendering script carried in the rendering instruction is recorded, and the rendering script is obtained as the original rendering script that needs to be replaced.

Then, the rendering script for replacement is written based on the original rendering script. The system developer can modify a sampling processing part of the original rendering script to obtain the rendering script for replacement. The original rendering script is a script that performs sampling rendering on the single-layer texture, and the rendering script for replacement is a rendering script that performs the sampling rendering on the multi-layer texture. For example, a sampling instruction texture2d in the original rendering script is modified to texture2dLod to obtain the rendering script for replacement. A quantity of original rendering scripts that need to be replaced in a typical application is not very large. Therefore, workload of writing the rendering script for replacement is not very heavy.

Finally, the script identifier replacement table is created. The system developer can allocate an identifier to the rendering script for replacement written above. An application may have several original rendering scripts that need to be replaced. The system developer can write corresponding rendering scripts for replacement and respectively allocate identifiers to the rendering scripts for replacement. Further, a correspondence between the identifier of the original rendering script and the identifier of the rendering script for replacement may be established, that is, the script identifier replacement table is created, as shown in Table 1.

**Table 1**

| Identifier of an original rendering script | Identifier of a rendering script for replacement |
|---|---|
| S1 | S11 |
| S2 | S21 |
| ... | ... |

After the processing is performed on the first render pass, each time the system program receives a rendering instruction of a render pass, the system program may obtain a sampling texture identifier carried in the rendering instruction. Further, the system program compares the sampling texture identifier with an attachment texture identifier of the first render pass, and if the sampling texture identifier and the attachment texture identifier are the same, determines that the sampling texture invoked in the rendering instruction of the second render pass is the attachment texture of the first render pass. In this case, the system program may obtain an identifier of a rendering script (namely, the original rendering script) carried in the rendering instruction, and search the script identifier replacement table for an identifier of a target rendering script corresponding to the identifier of the original rendering script. Then, the system program may modify the identifier of the original rendering script in the rendering instruction to the identifier of the target rendering script, to obtain the modified rendering instruction. Optionally, based on a requirement of an actual case, in addition to the modification, another modification may be further performed on the rendering instruction, for example, adding a parameter that needs to be invoked. Various cases are not listed one by one in this embodiment of this application.

For example, the script identifier replacement table is pre-stored in the system program. As shown in Table 1, the table records an identifier S2 of the original rendering script and an identifier S21 of the rendering script for replacement that have a correspondence. The system program receives the rendering instruction of the render pass A2 sent by the application, and obtains a sampling texture identifier B1 carried in the sampling instruction. The system program finds that the sampling texture identifier B1 is the same as the attachment texture identifier of the first render pass A1 after comparing the sampling texture identifier B1 with the attachment texture identifier, and the system program determines that the sampling texture invoked in the rendering instruction of the render pass A2 is the attachment texture of the render pass A1. In this case, the system program obtains the identifier S2 of the original rendering script carried in the rendering instruction, to search the script identifier replacement table for the identifier S21 of the rendering script for replacement corresponding to S2. The system program changes the script identifier S2 in the rendering instruction to S21, to obtain the modified rendering instruction.

The foregoing describes the overall solution of the rendering processing method, and the following separately describes the rendering processing process in detail with respect to the two cases provided in step S202.

Case 1: The plurality of render passes perform the consecutive downsampling on the single-layer texture, resulting in serious processing resource occupation.

When developing the application, the application developer often uses the single-layer texture to implement the three-dimensional image rendering process based on experience. To display a scene from a distant view in the image, the application developer needs to set the plurality of render passes for performing the consecutive downsampling processing. However, at a system level, switching of the render passes occupies a large quantity of processing resources. The consecutive downsampling processing performed by the plurality of render passes causes render pass switching for a plurality of times, which severely occupies system processing resources and slows application running.

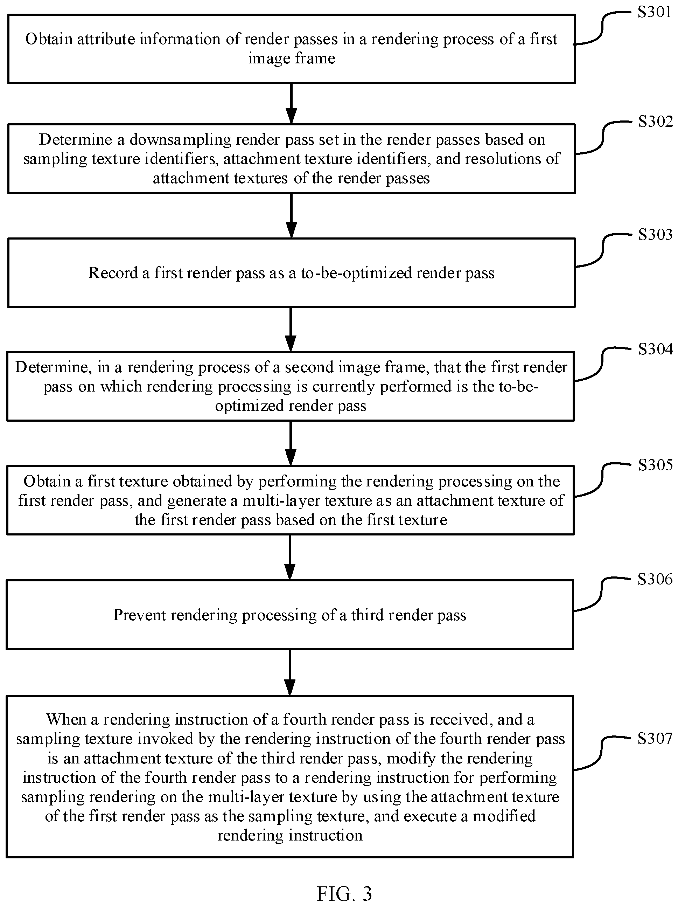

An embodiment of this application provides a processing procedure of a rendering processing method shown in FIG. 3, and the processing procedure includes the following processing steps.

S301: Obtain attribute information of render passes in a rendering process of a first image frame.

In a rendering process of any image frame, an application sends rendering instructions of the render passes to a system program in a specific sequence, and the system program receives the rendering instructions of the render passes and obtains some specified attribute information. Specific processing is shown in step S201, and details are not described herein again.

S302: Determine a downsampling render pass set in the render passes based on sampling texture identifiers, attachment texture identifiers, and resolutions of attachment textures of the render passes.

After receiving a rendering instruction of a render pass A2, the system program may obtain a sampling texture identifier (B1) of the render pass A2, and the system program may compare B1 with an attachment texture identifier of a render pass on which rendering processing is completed. If an attachment texture identifier of a render pass A1 is also B1, the system program determines that the attachment texture of the render pass A1 is the sampling texture of the render pass A2. The system program obtains a resolution of the attachment texture B1 of the render pass A1 and a resolution of an attachment texture B2 of the render pass A2, and compares the resolution of B1 with the resolution of B2. If the resolution of the attachment texture B3 is reduced by a specific ratio relative to the resolution of the attachment texture B2, the system program determines that the render pass A2 is obtained by downsampling the render pass A1.

Based on a same judgment principle, if a render pass A3 is obtained by downsampling the render pass A2, a render pass A4 is obtained by downsampling the render pass A3, and a render pass A5 is obtained by downsampling the render pass A4, the system program determines that the render passes A1 to A5 are a first-type downsampling render pass set, the render pass A1 is a to-be-optimized first render pass in the set, and the render passes A2 to A5 are to-be-prevented third render passes in the set. In the downsampling render pass set, downsampling ratios between every two render passes may be the same or different.

The system program may create a correspondence table, which is used to store a correspondence between the to-be-optimized render pass and the to-be-prevented render pass in the downsampling render pass set, as shown in Table 2.

**Table 2**

| Identifier of a to-be-optimized render pass | Identifier of a to-be-prevented render pass |
|---|---|
| A1 | A2, A3, A4, A5 |
| ... | ... |

S303: Record the first render pass as the to-be-optimized render pass.

The system program may pre-establish a to-be-optimized pass identifier set, and the to-be-optimized pass identifier set is used to store a pass identifier of the to-be-optimized render pass. Specific processing is shown in step S202, and details are not described herein again.

After determining that the first render pass is the to-be-optimized render pass, the system program records the pass identifier of the first render pass in the to-be-optimized pass identifier set, to identify the to-be-optimized and to-be-prevented render passes in a rendering process of a next image frame.

S304: Determine, in a rendering process of a second image frame, that the first render pass on which rendering processing is currently performed is the to-be-optimized render pass.

In the rendering process of the second image frame, the system program may receive the rendering instructions of the render passes sent by the application in the sequence, obtain pass identifies carried in the rendering instructions, and determine the to-be-optimized render pass based on the to-be-optimized pass identifier set. Specific processing is shown in step S203, and details are not described herein again.

S305: Obtain a first texture obtained by performing the rendering processing on the first render pass, and generate a multi-layer texture as an attachment texture of the first render pass based on the first texture.

When the first render pass is determined as the to-be-optimized render pass, the system program obtains the first texture generated by the first render pass, and processes, based on the first texture and based on a Mipmap technology, the first texture to generate the multi-layer texture. Specific processing is shown in step S204, and details are not described herein again.

S306: Prevent rendering processing of the third render pass.

In the rendering process of the second image frame, the system program may receive the rendering instructions of the render passes sent by the application in the sequence, and obtain the pass identifies carried in the rendering instructions. Each time the system program obtains a pass identifier, the system program may search the correspondence table created in step S302 for determining whether the pass identifier is included, that is, determine whether the render pass on which the rendering processing is currently performed is the to-be-prevented render pass. If the pass identifier is in the correspondence table created in step S302, the system program determines that the render pass on which the rendering processing is currently performed is the to-be-prevented render pass, and the system program prevents the application from processing the rendering instruction.

S307: When a rendering instruction of a fourth render pass is received, and a sampling texture invoked by the rendering instruction of the fourth render pass is an attachment texture of the third render pass, modify the rendering instruction of the fourth render pass to a rendering instruction for performing sampling rendering on the multi-layer texture by using the attachment texture of the first render pass as the sampling texture, and execute a modified rendering instruction.

After the processing in step S305 is performed on the first render pass, each time the system program receives a rendering instruction of a render pass, the system program may obtain a pass identifier and a sampling texture identifier carried in the rendering instruction. Further, the system program searches the obtained pass identifier in the correspondence table created in step S302, and compares the sampling texture identifier with the attachment texture identifier of the to-be-prevented render pass. If the pass identifier is not in the correspondence table created in step S302, and the sampling texture identifier is the same as an attachment texture identifier of a to-be-prevented render pass, the system program modifies the rendering instruction of the render pass. The modification to the rendering instruction by the system program may include modifying a sampling texture identifier that is of the third render pass and that is carried in the rendering instruction to an attachment texture identifier of the first render pass, and may further include replacing a rendering script invoked by the rendering instruction, where the first render pass is the to-be-optimized render pass, and the third render pass is the to-be-prevented render pass. Specific processing of the modification that needs to be performed on the rendering instruction is shown in step S205, and details are not described herein again.

According to the rendering processing method provided in this embodiment of this application, a quantity of render passes in the rendering process can be significantly reduced, occupation of system processing resources by the application can be effectively reduced, and a running speed of the application can be improved. This helps improve user experience.

Case 2: The post-sampling resolution obtained after the sampling is performed on the single-layer texture is less than the original resolution, resulting in the occurrence of the image warping.

When developing the application, the application developer often uses the single-layer texture to implement the three-dimensional image rendering process based on experience, but a resolution of the single-layer texture is usually high. Therefore, when sampling rendering is performed on some local areas, the single-layer texture with the high resolution needs to be reduced to the local area with a low resolution. As a result, pixels in the single-layer texture are stacked in the local area, and finally the image is warped.

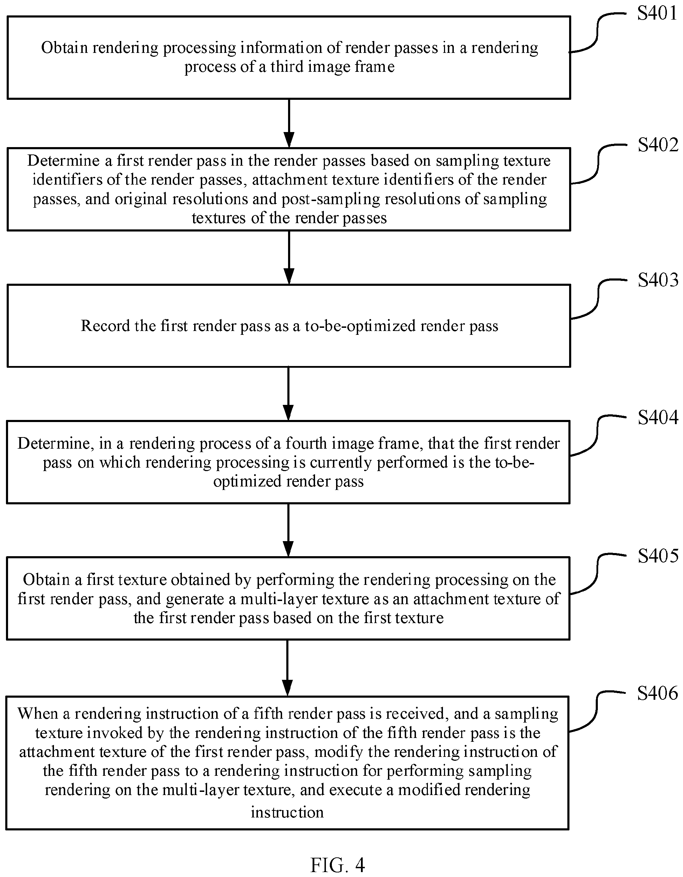

An embodiment of this application provides a processing procedure of a rendering processing method shown in FIG. 4, and the processing procedure includes the following processing steps.

S401: Obtain rendering processing information of render passes in a rendering process of a third image frame.

In a rendering process of any image frame, an application sends rendering instructions of the render passes to a system program in a specific sequence, and the system program receives the rendering instructions of the render passes and obtains some specified attribute information. Specific processing is shown in step S201, and details are not described herein again.

S402: Determine a first render pass in the render passes based on sampling texture identifiers of the render passes, attachment texture identifiers of the render passes, and original resolutions and post-sampling resolutions of sampling textures of the render passes.

After receiving a rendering instruction of a render pass A5, the system program may obtain a sampling texture identifier (B1), an attachment texture identifier (B5), and an original resolution and a post-sampling resolution of a sampling texture of the render pass A5. The system program may compare B1 with an attachment texture identifier of a render pass on which rendering processing is completed. If an attachment texture identifier of a render pass A1 is also B1, the system program determines that the attachment texture of the render pass A1 is the sampling texture of the render pass A5. A resolution of the attachment texture B1 of the render pass A1 obtained by the system program is the original resolution of the sampling texture of the render pass A5, and the system program compares the original resolution with the post-sampling resolution of the sampling texture. If the original resolution of the sampling texture is greater than the post-sampling resolution, the render pass A1 is determined as a to-be-optimized render pass.

S403: Record the first render pass as the to-be-optimized render pass.

The system program may pre-establish a to-be-optimized pass identifier set, and the to-be-optimized pass identifier set is used to store a pass identifier of the to-be-optimized render pass. Specific processing is shown in step S202, and details are not described herein again.

After determining that the first render pass is the to-be-optimized render pass, the system program records a pass identifier of the first render pass in the to-be-optimized pass identifier set, to identify the to-be-optimized render pass in a rendering process of a next image frame.

S404: Determine, in a rendering process of a fourth image frame, that the first render pass on which rendering processing is currently performed is the to-be-optimized render pass.

In the rendering process of the fourth image frame, the system program may receive the rendering instructions of the render passes sent by the application in the sequence, obtain pass identifies carried in the rendering instructions, and determine the to-be-optimized render pass based on the to-be-optimized pass identifier set. Specific processing is shown in step S203, and details are not described herein again.

S405: Obtain a first texture obtained by performing the rendering processing on the first render pass, and generate a multi-layer texture as an attachment texture of the first render pass based on the first texture.

When the first render pass is determined as the to-be-optimized render pass, the system program obtains the first texture generated by the first render pass, and processes, based on the first texture and based on a Mipmap technology, the first texture to generate the multi-layer texture. Specific processing is shown in step S204, and details are not described herein again.

S406: When a rendering instruction of a fifth render pass is received, and a sampling texture invoked by the rendering instruction of the fifth render pass is the attachment texture of the first render pass, modify the rendering instruction of the fifth render pass to a rendering instruction for performing sampling rendering on the multi-layer texture, and execute a modified rendering instruction.

After the processing in step S405 is performed on the first render pass, each time the system program receives a rendering instruction of a render pass, the system program may obtain a sampling texture identifier carried in the rendering instruction. After receiving the rendering instruction of the fifth render pass, the system program may obtain a sampling texture identifier carried in the rendering instruction. If the sampling texture identifier is the same as an attachment texture identifier of the first render pass, the system program determines that the sampling texture invoked by the rendering instruction of the fifth render pass is the attachment texture of the first render pass. The system program obtains a rendering script identifier carried in the rendering instruction, and modifies the script identifier to an identifier of a target rendering script, to obtain the modified rendering instruction. Specific processing is shown in step S205, and details are not described herein again.

According to the rendering processing method provided in this embodiment of this application, the multi-layer texture with different resolutions may be generated for the single-layer texture, and smoothing processing is performed on the generated multi-layer texture. This avoids pixel stacking. In this way, when sampling rendering is performed on a local area, a sampling texture with a matched resolution may be selected based on an LOD technology, so that image warping can be avoided.

All the foregoing optional technical solutions may be randomly combined to form optional embodiments of this application. Details are not described herein.

In embodiments of this application, it is determined that the first render pass is the render pass that needs to be optimized. When the processing is performed on the first render pass and after the rendering processing is performed on the first render pass to obtain the first texture, the first texture is not used as the attachment texture of the first render pass, but further processing is performed on the first texture to obtain the multi-layer texture as the attachment texture of the first render pass. In addition, when a rendering instruction of another render pass subsequently invokes the attachment texture of the first render pass, a corresponding rendering instruction is intercepted, a corresponding modification is performed, and the modified rendering instruction is executed, to ensure that rendering processing of the another render pass can be performed normally. Render passes that have processing advantages by using the multi-layer texture may be predetermined manually, through automatic detection, or in another manner. Further, when the rendering processing is performed on the render pass, the render passes are optimized in the foregoing processing manner. In this way, some common render pass problems in different applications can be resolved without modifying program code for a large quantity of applications one by one, and workload can be greatly reduced when the render pass problem is resolved.

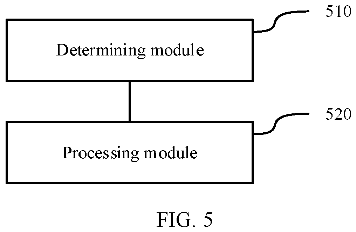

Based on a same technical concept, an embodiment of this application further provides a rendering processing apparatus. The apparatus may be used in the terminal mentioned in the foregoing embodiments. As shown in FIG. 5, the apparatus includes:
a determining module 510, configured to: obtain attribute information of render passes in a rendering process of a second image frame; and record a to-be-optimized render pass in the render passes based on the attribute information of the render passes. The determining module 510 may specifically implement determining functions in steps S201, S202, S301, S302, S303, S401, S402, and S403 and another implicit step.

The determining module 510 is configured to determine, in a rendering process of a first image frame, that a first render pass on which rendering processing is currently performed is the to-be-optimized render pass. The determining module 510 may specifically implement determining functions in steps S203, S304, and S404 and another implicit step.

A processing module 520 is configured to: obtain a first texture obtained by performing the rendering processing on the first render pass; generate a multi-layer texture as an attachment texture of the first render pass based on the first texture; and when a rendering instruction of a second render pass is received, and a sampling texture invoked by the rendering instruction is the attachment texture of the first render pass, modify the rendering instruction to a rendering instruction for performing sampling rendering on the multi-layer texture, and execute a modified rendering instruction. The processing module 520 may specifically implement processing functions in steps S204, S205, S305, S306, S307, S405, and S406 and another implicit step.

In a possible implementation, the determining module 510 is configured to: obtain the attribute information of the render passes in the rendering process of the second image frame; determine a downsampling render pass set in the render passes based on sampling texture identifiers, attachment texture identifiers, and resolutions of attachment textures of the render passes, where the downsampling render pass set includes the first render pass and a third render pass, and the third render pass is a render pass that performs consecutive downsampling on the attachment texture of the first render pass; and record the first render pass as the to-be-optimized render pass. The determining module 510 may specifically implement determining functions in steps S301, S302, and S303 and another implicit step.

The determining module 510 is configured to determine, in the rendering process of the first image frame, that the first render pass on which the rendering processing is currently performed is the to-be-optimized render pass. The determining module 510 may specifically implement a determining function in step S304 and another implicit step.

The processing module 520 is configured to: obtain the first texture obtained by performing the rendering processing on the first render pass; generate the multi-layer texture as the attachment texture of the first render pass based on the first texture; prevent rendering processing of the third render pass; and when a rendering instruction of a fourth render pass is received, and a sampling texture invoked by the rendering instruction of the fourth render pass is an attachment texture of the third render pass, modify the rendering instruction of the fourth render pass to a rendering instruction for performing sampling rendering on the multi-layer texture by using the attachment texture of the first render pass as the sampling texture, and execute a modified rendering instruction. The processing module 520 may specifically implement processing functions in steps S305, S306, and S307 and another implicit step.

In a possible implementation, the determining module 510 is configured to obtain the attribute information of the render passes in the rendering process of the second image frame; determine the first render pass in the render passes based on the sampling texture identifiers, the attachment texture identifiers, and the original resolutions and the post-sampling resolutions of the sampling textures of the render passes, where the attachment texture of the first render pass is a sampling texture of a fifth render pass, and an original resolution of the sampling texture of the fifth render pass is greater than a post-sampling resolution; and record the first render pass as the to-be-optimized render pass. The determining module 510 may specifically implement determining functions in steps S401, S402, and S403 and another implicit step.

The determining module 510 is configured to determine, in the rendering process of the first image frame, that the first render pass on which the rendering processing is currently performed is the to-be-optimized render pass. The determining module 510 may specifically implement a determining function in step S404 and another implicit step.

The processing module 520 is configured to: obtain the first texture obtained by performing the rendering processing on the first render pass; generate the multi-layer texture as the attachment texture of the first render pass based on the first texture; and when the rendering instruction of the second render pass is received, and the sampling texture invoked by the rendering instruction is the attachment texture of the first render pass, modify the rendering instruction to the rendering instruction for performing sampling rendering on the multi-layer texture, and execute the modified rendering instruction. The processing module 520 may specifically implement processing functions in steps S405 and S406 and another implicit step.

It should be noted that the determining module 510 and the processing module 520 may be implemented by a processor, or may be implemented by a processor in cooperation with a memory.

In embodiments of this application, it is determined that the first render pass is the render pass that needs to be optimized. When the processing is performed on the first render pass and after the rendering processing is performed on the first render pass to obtain the first texture, the first texture is not used as the attachment texture of the first render pass, but the further processing is performed on the first texture to obtain the multi-layer texture as the attachment texture of the first render pass. In addition, when the rendering instruction of the another render pass subsequently invokes the attachment texture of the first render pass, the corresponding rendering instruction is intercepted, the corresponding modification is performed, and the modified rendering instruction is executed, to ensure that the rendering processing of the another render pass can be performed normally. The render passes that have the processing advantages by using the multi-layer texture may be predetermined manually, through the automatic detection, or in the another manner. Further, when the rendering processing is performed on the render pass, the render passes are optimized in the foregoing processing manner. In this way, the some common render pass problems in the different applications can be resolved without modifying the program code for the large quantity of applications one by one, and the workload can be greatly reduced when the render pass problem is resolved. This may be implemented by the processor, or may be implemented by the processor in cooperation with the memory.

It should be noted that: when the rendering processing apparatus provided in the foregoing embodiments performs the rendering processing, division into the foregoing functional modules is merely used as an example for description. In actual application, the foregoing functions can be allocated to different functional modules and implemented based on a requirement, that is, an inner structure of an apparatus is divided into different functional modules to implement all or some of the functions described above. In addition, the rendering processing apparatus provided in the foregoing embodiments has a same concept as the rendering processing method embodiment. For a specific implementation process of the rendering processing apparatus, refer to the method embodiment. Details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions, and when the computer program instructions are loaded and executed on a device, all or some of the procedures or functions described in embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely an embodiment of this application, but are not intended to limit this application. Any modification, equivalent replacement, improvement, or the like made without departing from the principle of this application should fall within the protection scope of this application.

## Claims

1. A rendering processing method, wherein the method comprises:
determining, in a rendering process of a first image frame, that a first render pass on which rendering processing is currently performed is a to-be-optimized render pass;
obtaining a first texture obtained by performing the rendering processing on the first render pass;
generating a multi-layer texture as an attachment texture of the first render pass based on the first texture; and
when a rendering instruction of a second render pass is received, and a sampling texture invoked by the rendering instruction is the attachment texture of the first render pass, modifying the rendering instruction to a rendering instruction for performing sampling rendering on the multi-layer texture, and executing a modified rendering instruction.

2. The method according to claim 1, wherein before the determining, in a rendering process of a first image frame, that a first render pass on which rendering processing is currently performed is a to-be-optimized render pass, the method further comprises:
obtaining attribute information of render passes in a rendering process of a second image frame; and
recording a to-be-optimized render pass in the render passes based on the attribute information of the render passes.

3. The method according to claim 2, wherein the recording a to-be-optimized render pass in the render passes based on the attribute information of the render passes comprises:
determining a downsampling render pass set in the render passes based on sampling texture identifiers, attachment texture identifiers, and resolutions of attachment textures of the render passes, wherein the downsampling render pass set comprises the first render pass and a third render pass, and the third render pass is a render pass that performs consecutive downsampling on the attachment texture of the first render pass; and
recording the first render pass as the to-be-optimized render pass.

4. The method according to claim 3, wherein after the generating a multi-layer texture as an attachment texture of the first render pass based on the first texture, the method further comprises:
preventing rendering processing of the third render pass.

5. The method according to claim 4, wherein after the preventing rendering processing of the third render pass, the method further comprises:
when a rendering instruction of a fourth render pass is received, and a sampling texture invoked by the rendering instruction of the fourth render pass is an attachment texture of the third render pass, modifying the rendering instruction of the fourth render pass to a rendering instruction for performing sampling rendering on the multi-layer texture by using the attachment texture of the first render pass as the sampling texture, and executing a modified rendering instruction.

6. The method according to claim 2, wherein the recording a to-be-optimized render pass in the render passes based on the attribute information of the render passes comprises:
determining the first render pass in the render passes based on sampling texture identifiers of the render passes, attachment texture identifiers of the render passes, and original resolutions and post-sampling resolutions of sampling textures of the render passes, wherein the attachment texture of the first render pass is a sampling texture of a fifth render pass, and an original resolution of the sampling texture of the fifth render pass is greater than a post-sampling resolution; and
recording the first render pass as the to-be-optimized render pass.

7. The method according to claim 2, wherein the second image frame is a previous image frame of the first image frame.

8. The method according to claim 1, wherein the modifying the rendering instruction to a rendering instruction for performing sampling rendering on the multi-layer texture comprises:
determining, based on a correspondence between an identifier of an original rendering script and an identifier of a rendering script for performing sampling rendering on the multi-layer texture, an identifier of a target rendering script corresponding to the identifier of the original rendering script in the rendering instruction; and
modifying the identifier of the original rendering script in the rendering instruction to the identifier of the target rendering script, to obtain the rendering instruction for performing sampling rendering on the multi-layer texture.

9. A rendering processing apparatus, wherein the apparatus comprises:
a determining module, configured to determine, in a rendering process of a first image frame, that a first render pass on which rendering processing is currently performed is a to-be-optimized render pass; and
a processing module, configured to: obtain a first texture obtained by performing the rendering processing on the first render pass; generate a multi-layer texture as an attachment texture of the first render pass based on the first texture; and when a rendering instruction of a second render pass is received, and a sampling texture invoked by the rendering instruction is the attachment texture of the first render pass, modify the rendering instruction to a rendering instruction for performing sampling rendering on the multi-layer texture, and execute a modified rendering instruction.

10. The apparatus according to claim 9, wherein the determining module is further configured to:
obtain attribute information of render passes in a rendering process of a second image frame; and
record a to-be-optimized render pass in the render passes based on the attribute information of the render passes.

11. The apparatus according to claim 10, wherein the determining module is configured to:
determine a downsampling render pass set in the render passes based on sampling texture identifiers, attachment texture identifiers, and resolutions of attachment textures of the render passes, wherein the downsampling render pass set comprises the first render pass and a third render pass, and the third render pass is a render pass that performs consecutive downsampling on the attachment texture of the first render pass; and
record the first render pass as the to-be-optimized render pass.

12. The apparatus according to claim 11, wherein the processing module is further configured to:
prevent rendering processing of the third render pass.

13. The apparatus according to claim 12, wherein the processing module is further configured to:
when a rendering instruction of a fourth render pass is received, and a sampling texture invoked by the rendering instruction of the fourth render pass is an attachment texture of the third render pass, modify the rendering instruction of the fourth render pass to a rendering instruction for performing sampling rendering on the multi-layer texture by using the attachment texture of the first render pass as the sampling texture, and execute a modified rendering instruction.

14. The apparatus according to claim 10, wherein the determining module is configured to:
determine the first render pass in the render passes based on sampling texture identifiers of the render passes, attachment texture identifiers of the render passes, and original resolutions and post-sampling resolutions of sampling textures of the render passes, wherein the attachment texture of the first render pass is a sampling texture of a fifth render pass, and an original resolution of the sampling texture of the fifth render pass is greater than a post-sampling resolution; and
record the first render pass as the to-be-optimized render pass.

15. The apparatus according to claim 10, wherein the second image frame is a previous image frame of the first image frame.

16. The method according to claim 9, wherein the processing module is configured to:
determine, based on a correspondence between an identifier of an original rendering script and an identifier of a rendering script for performing sampling rendering on the multi-layer texture, an identifier of a target rendering script corresponding to the identifier of the original rendering script in the rendering instruction; and
modify the identifier of the original rendering script in the rendering instruction to the identifier of the target rendering script, to obtain the rendering instruction for performing sampling rendering on the multi-layer texture.

17. A computer device, wherein the computer device comprises a memory and a processor, and the memory is configured to store computer instructions; and
the processor executes the computer instructions stored in the memory, so that the computer device performs the method according to any one of claims 1 to 8.

18. A computer-readable storage medium, wherein the computer-readable storage medium stores computer program code, and when the computer program code is executed by a computer device, the computer device performs the method according to any one of claims 1 to 8.

19. A computer program product, wherein the computer program product comprises computer program code, and when the computer program code is executed by a computer device, the computer device performs the method according to any one of claims 1 to 8.
